# EUROPÄISCHE PATENTSCHRIFT

(11) **EP 3 766 793 B1**
(45) Veröffentlichungstag und Bekanntmachung des Hinweises auf die Patenterteilung: **12.04.2023**
(21) Anmeldenummer: 20182903.3
(22) Anmeldetag: 29.06.2020
(51) Int. Cl.: B65D 8/00, B65D 65/46, B65D 77/20

(54) **VERFAHREN ZUR HERSTELLUNG VON LEBENSMITTELPACKUNGEN**
PROCESS FOR THE MANUFACTURE OF FOOD PACKAGES
PROCÉDÉ DE FABRICATION D'EMBALLAGES ALIMENTAIRES

(30) Priorität: 15.07.2019 DE 202019103880 U
(43) Veröffentlichungstag der Anmeldung: 20.01.2021
(73) Patentinhaber: Dieckelmann, Roland, 32758 Detmold (DE)
(72) Erfinder: Dieckelmann, Roland, 32758 Detmold (DE)
(74) Vertreter: Ter Meer Steinmeister & Partner

(56) Entgegenhaltungen:
- EP-A1- 2 572 875
- DE-A1-102006 033 947

## Beschreibung

Die Erfindung betrifft ein Verfahren zur Herstellung von Lebensmittelpackungen (P), bei dem die Lebensmittel in Behälter (12) eingefüllt und die Behälter mit einer Folie (28) gesiegelt werden,.

Aus DE 10 2006 033 974 A1 ist ein Verfahren dieser Art bekannt, bei dem Behälter aus Porzellan verwendet werden.

Aus EP 2 572 875 A1 ist die Verwendung von Folien aus biologisch abbaubarem Material mit aus nachwachsenden Rohstoffen hergestelltem Kleber zum Siegeln von Behältern bekannt.

Bei den meisten herkömmlichen Lebensmittelpackungen besteht der Behälter aus einer Aluminiumfolie oder einem dünnen Aluminiumblech, und bei den zum Einsiegeln der Lebensmittel verwendeten Folien handelt es sich um Kunststofffolien, beispielsweise aus Polycarbonat, Vinylesterharz oder Epoxidharz, die häufig auch Weichmacher wie beispielsweise Bisphenol A (BPA) enthalten.

Da Aluminium unter dem Einfluss von Säure und Salz löslich ist, können gewisse Mengen an Aluminium über die Lebensmittel in den menschlichen Körper gelangen. Dies kann bei höherer Exposition zu gesundheitlichen Schäden führen, beispielsweise zu Schäden des Nervensystems, Wirkungen auf die Fruchtbarkeit und auf Ungeborene, ungünstige Wirkung auf die Knochenentwicklung sowie zu Krebs und Demenzerkrankungen.

Auch die in den Kunststofffolien enthaltenen Weichmacher sind gesundheitlich nicht unbedenklich, insbesondere bei Lebensmittelverpackungen für Kindernahrung.

Die herkömmlichen Lebensmittelverpackungen führen auch zu einer nicht unbeträchtlichen Umweltbelastung, da sich die verschiedenen Materialkomponenten der Verpackungen oft nur schwer voneinander trennen lassen, wodurch eine umweltfreundliche Abfallentsorgung oder ein Recycling erschwert wird.

Aufgabe der Erfindung ist es, ein Verfahren zur Herstellung umweltfreundlicher Lebensmittelpackungen zu schaffen, das zugleich eine Minimierung der Gesundheitsrisiken ermöglicht.

Diese Aufgabe wird erfindungsgemäß dadurch gelöst, dass die Behälter aus Edelstahlblech hergestellt werden, dass eine Folie aus biologisch abbaubarem Material verwendet wird und dass beim Siegeln für die Verbindung der Folie mit dem Behälter ein Kleber aus einem pflanzlichen Rohstoff eingesetzt wird, der gegenüber der Folie eine größere Adhäsion hat als gegenüber dem Edelstahl und der beim Siegeln auf nicht mehr als 100° C erhitzt wird.

Nach dem Öffnen der Lebensmittelpackung kann die Folie einschließlich des Klebers, der an der Folie besser haftet als an dem Edelstahl, problemlos und weitgehend rückstandsfrei von dem Edelstahlbehälter getrennt werden, so dass die Edelstahlbehälter beispielsweise in einem Konvektomaten regeneriert und im Rahmen eines Mehrwegsystems der Wiederverwendung zugeführt werden können, während sich die Folien umweltfreundlich entsorgen lassen. Da die komplette Verpackung kein Aluminium enthält, werden die gesundheitlichen Risiken minimiert.

Vorteilhafte Ausgestaltungen und Weiterbildungen der Erfindung sind in den Unteransprüchen angegeben.

Bei der Folie kann es sich um einen Biokunststoff handeln, der aus nachwachsenden Rohstoffen wie z.B. Maisstärke gewonnen wird und keine gesundheitsschädlichen Weichmacher enthält. Beispielsweise kann die Folie eine Folie auf Polylactid-Basis (PLA) sein. Vorzugsweise ist auch der Kleber ebenso wie die Folie biologisch abbaubar.

Bei der Herstellung der Lebensmittelpackung erfolgt das Siegeln bei einer Temperatur von weniger als 100°C, beispielsweise bei 85°C. Auf diese Weise kann ein dichter Einschluss der Lebensmittel erreicht werden, ohne dass das Biomaterial der Folie durch hohe Temperaturen geschädigt wird. Der Kleber kann wahlweise schon vor dem Einfüllen der Lebensmittel in die Behälter auf den Rand der Edelstahlbehälter aufgetragen werden, geht dann aber beim Siegeln unter Temperatureinwirkung eine festere Verbindung mit der Folie ein.

Um die Haltbarkeit der Lebensmittel zu verbessern, kann die Luft in den Behältern unmittelbar vor dem Siegeln durch ein Lebensmittelgas (MAP; Modified Atmosphere Packaging) ersetzt werden.

Im folgenden wird ein Ausführungsbeispiel anhand der Zeichnung näher erläutert.

Es zeigen:
- Fig. 1: eine schematische Darstellung einer Verpackungsanlage zur Herstellung erfindungsgemäßer Lebensmittelpackungen;
- Fig. 2: einen vergrößerten Schnitt durch einen noch offenen Behälter, der mit Lebensmitteln befüllt werden soll, um eine erfindungsgemäße Lebensmittelpackung zu bilden;
- Fig. 3: einen Schnitt durch die mittels einer Siegelfolie geschlossene Lebensmittelpackung; und
- Fig. 4: einen Schnitt durch die Lebensmittelpackung nach dem teilweisen Aufreißen der Siegelfolie.

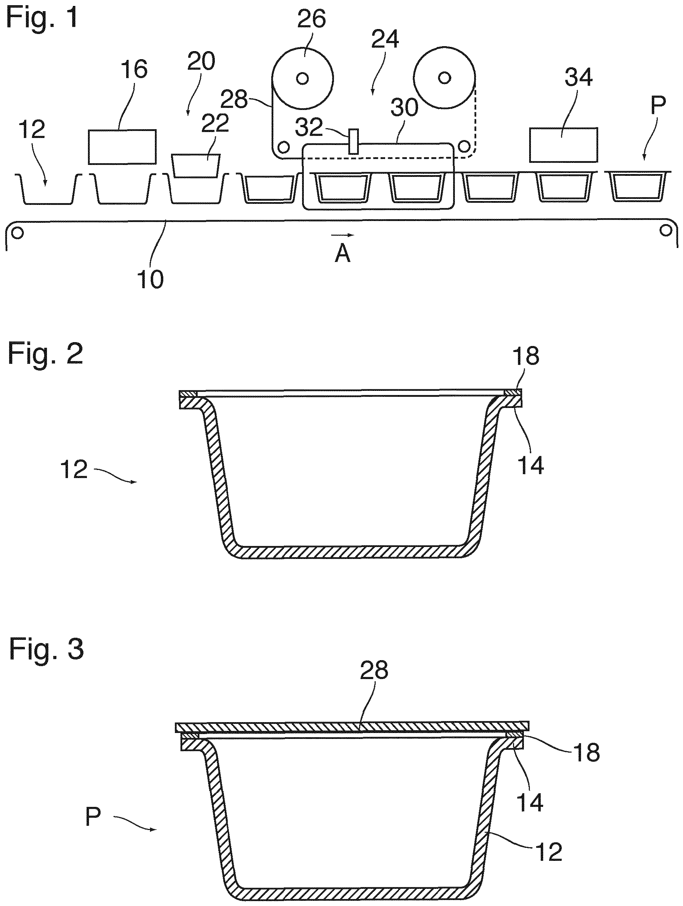

In Fig. 1 ist schematisch eine Verpackungsanlage dargestellt, die zur Herstellung von Lebensmittelpackungen P dient.

Auf einem Förderer 10, der sich in der durch einen Pfeil A angegebenen Richtung von links nach rechts in Fig. 1 bewegt, werden am stromaufwärtigen Ende Behälter 12 aus Edelstahlblech aufgegeben, die an der Oberseite offen sind. Der Rand der Behälter 12 ist von einem in der Ebene der Behälteröffnung liegenden Randflansch 14 (Fig. 2) umgeben. In einer Beleimungsstation 16 wird auf die oberen Oberflächen der Randflansche 14 der Behälter 12 ein Kleber 18 aufgetragen, beispielsweise ein biologisch abbaubarer Kleber, der aus pflanzlichen Rohstoffen wie z.B. Maisstärke hergestellt ist und schon bei Temperaturen unterhalb von 100° abbindet.

Stromabwärts der Beleimungsstation 16 werden die Behälter 12 in einer Befüllstation 20 mit Lebensmitteln 22 befüllt, beispielsweise mit Fertiggerichten. Die befüllten Behälter treten dann in eine Siegelstation 24 ein in der die oberen Öffnungen der Behälter 12 gasdicht verschlossen werden, indem eine von einer Rolle 26 abgezogene Folie 28 unter Wärmeeinwirkung auf die Randflansche 14 der Behälter aufgesiegelt wird. Die matrixförmig in mehreren Reihen und Spalten angeordneten Behälter 12 bzw. die daraus entstandenen Lebelsmittelpackungen werden so zu einem zusammenhängenden Band miteinander verbunden. Das Siegeln erfolgt beispielsweise bei einer Temperatur von 85° in einem weitgehend geschlossenen Gehäuse 30, in das über eine Begasungsleitung 32 ein die Haltbarkeit der Lebensmittel steigerndes Gas eingeleitet wird (MAP). Durch diese Gaszufuhr wird die noch in den Behältern 12 vorhandene Luft verdrängt, bevor die Behälter mit der Folie 28 verschlossen werden.

Bei der Folie 28 handelt es sich um eine biologisch abbaubare Folie aus pflanzlichen Rohstoffen, beispielsweise aus dem Biokunststoff PLA (Polylactide Acid). Der Kleber 18 und das Material der Folie 28 sind so aufeinander abgestimmt, dass der Kleber beim Heißsiegeln eine feste und dichte Verbindung zwischen der Folie 28 und den Behältern 12 bewirkt, im abgebundenen Zustand jedoch gegenüber der Folie 28 eine größere Adhäsion aufweist als gegenüber dem Edelstahl der Behälter 12.

Wenn die Behälter die Siegelstation 24 verlassen haben, wird in einer Trennstation 34 die Folie 28 in den Zwischenräumen zwischen den einzelnen Lebensmittelpackungen P durchtrennt, so dass die Lebensmittelpackungen P dann einzeln vom Förderer 10 abgenommen werden können.

In Fig. 3 ist eine einzelne Lebelsmittelpackung P (der Einfachheit halber ohne Inhalt) im Schnitt dargestellt. Die Packung besteht aus dem Behälter 12 und der die Behälteröffnung verschließenden Folie 28, die durch den Kleber 18 mit dem Randflansch 14 des Behälters verbunden ist.

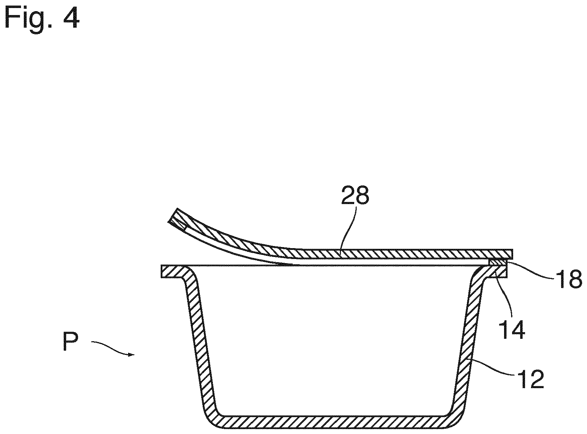

Fig. 4 zeigt die Lebensmittelpackung P in dem Zustand, in dem der Behälter 12 durch Aufreißen der Folie 28 geöffnet wurde. Man erkennt, dass sich beim Aufreißen der Kleber 18 von dem Edelstahl des Behälters 12 löst und an der Folie 28 haften bleibt. Wenn die Folie 28 ganz abgerissen wurde, kann sie zusammen mit dem daran haftenden Kleber 18 umweltfreundlich entsorgt werden, da sowohl die Folie als auch der Kleber biologisch abbaubar sind. Zurück bleibt der aus Edelstahl bestehende Behälter 12, der praktisch keine Rückstände von Kleber oder Folie aufweist und nach entsprechender Reinigung in einem Mehrwegsystem zum Hersteller der Lebensmittelprodukte zurückgeführt und regeneriert und erneut verwendet werden kann.

## Patentansprüche

1. Verfahren zur Herstellung von Lebensmittelpackungen (P), bei dem die Lebensmittel in Behälter (12) eingefüllt und die Behälter mit einer Folie (28) gesiegelt werden, welche aus biologisch abbaubarem Material besteht, und beim Siegeln für die Verbindung der Folie (28) mit dem Behälter ein Kleber (18) aus einem pflanzlichen Rohstoff eingesetzt wird, **dadurch gekennzeichnet, dass** die Behälter (12) aus Edelstahlblech hergestellt werden, wobei der Kleber (18) gegenüber der Folie eine größere Adhäsion hat als gegenüber dem Edelstahl und beim Siegeln auf nicht mehr als 100° C erhitzt wird.

2. Verfahren nach Anspruch 1, bei dem die Folie (28) aus einem pflanzlichen Rohstoff hergestellt ist.

3. Verfahren nach Anspruch 2, bei dem die Folie (28) eine Folie auf Polylactid-Basis ist.

4. Verfahren nach einem der vorstehenden Ansprüche, bei dem der Kleber (18) biologisch abbaubar ist.

## Claims

1. A method for producing food packages (P), in which the food is filled into containers (12) and the containers are sealed with a foil (28) which consists of biodegradable material, and, during sealing, an adhesive (18) made from a vegetable raw material is used for adhering the foil (28) to the container, **characterized in that** the containers (12) are made of stainless steel sheet metal, wherein the adhesive (18) has greater adhesion to the foil than to the stainless steel and is heated to not more than 100°C in the sealing. process.

2. The method according to claim 1, wherein the foil (28) is made of a vegetable raw material.

3. The method of claim 2, wherein the foil (28) is a polylactide-based film.

4. The method according to any one of the preceding claims, wherein the adhesive (18) is biodegradable.

## Revendications

1. Procédé pour fabriquer des emballages pour produits alimentaires (P), dans lequel les produits alimentaires sont versés dans des récipients (12) et les récipients sont scellés avec un film (28) qui est constitué d'un matériau biodégradable, et une colle (18) constituée d'une matière première végétale est utilisée lors du scellage pour assembler le film (28) au récipient, **caractérisé en ce que** les récipients (12) sont fabriqués à partir de tôle d'acier inoxydable, dans lequel la colle (18) a une adhérence par rapport au film supérieure à celle par rapport à l'acier inoxydable et n'est pas chauffée à plus de 100 °C lors du scellage.

2. Procédé selon la revendication 1, dans lequel le film (28) est fabriqué à partir d'une matière première végétale.

3. Procédé selon la revendication 2, dans lequel le film (28) est un film à base de polylactide.

4. Procédé selon l'une des revendications précédentes, dans lequel la colle (18) est biodégradable.
